# EUROPÄISCHE PATENTSCHRIFT

(11) **EP 1 222 238 B1**
(45) Veröffentlichungstag und Bekanntmachung des Hinweises auf die Patenterteilung: **11.04.2007**
(21) Anmeldenummer: 00962441.2
(22) Anmeldetag: 05.09.2000
(51) Int. Cl.: C10B 53/02, C10J 3/00

(54) **Verfahren zur Erzeugung von Wasserstoff unter Speicherung von Solarenergie**
Process for the production of hydrogen with concomitant storage of solar energy
Procédé de production d'hydrogène avec stockage d'énergie solaire simultané

(30) Priorität: 06.09.1999 DE 19942398
(43) Veröffentlichungstag der Anmeldung: 17.07.2002
(73) Patentinhaber: Schenck, Günter Edwin Otto, 45481 Mülheim an der Ruhr (DE); Schenck, Ulrich Gernot, 81667 München (DE); Bommer, Gudrun Traude, 69121 Heidelberg (DE)
(72) Erfinder:
(74) Vertreter: Weisse, Renate
(86) Internationale Anmeldenummer: PCT/EP2000/008649
(87) Internationale Veröffentlichungsnummer: WO 2001/018151

(56) Entgegenhaltungen:
- WO-A-00/06671
- DE-A- 19 618 213

## Beschreibung

### Technisches Gebiet

Die Erfindung betrifft ein Verfahren zur Erzeugung von Wasserstoff und zur Speicherung von Solarenergie unter Verminderung des CO₂-Anteils der Luft.

Bei der Erzeugung von Energie aus fossilen Brennstoffen wird CO₂ in erheblichen Mengen an die Atmosphäre abgegeben. Nach derzeit gültigen Klimamodellen tritt dadurch ein Anstieg des CO₂-Gehalts in der Atmosphäre auf. Dieser Anstieg bewirkt durch einen "Treibhauseffekt" ein Ansteigen der globalen mittleren Temperatur, was wiederum zu schwerwiegenden Klimaänderungen fuhren kann. Das Bestreben ist daher, den CO₂-Ausstoß zu vermindern.

### Stand der Technik

Die Verminderung des CO₂-Ausstoßes wird auf verschiedene Weise versucht. Ein Weg ist das Einsparen von Energie durch bessere Isolation von Gebäuden, Erhöhung des Wirkungsgrades von Kraftmaschinen undsoweiter. Dabei wird überwiegend die noch erforderliche Energie aus fossilen Brennstoffen erzeugt, wobei immer noch CO₂ freigesetzt wird. Ein anderer Weg ist die Energiegewinnung von "Solarenergie". Dazu zählt direkt aus der Sonneneinstrahlung, also durch Solarzellen oder Solarkollektoren, erzeugte Energie. Man kann dazu auch Energien zählen, die indirekt duch die Sonneneinstrahlung bewirkt werden, wie Wind- und Wasserenergie. Solar-, Wind- und Wasserenergie bringen, wenn hohe Leistungen erzeugt werden sollen, Beeinträchtigungen der Umwelt mit sich. Sie sind aber CO₂-neutral und erhöhen den CO₂-Gehalt der Atmosphäre nicht. Der CO₂-Gehalt wird aber auch nicht vermindert.

Schließlich gibt es noch die Erzeugung von Energie aus Biomasse. Die gängigste Art ist das Heizen mit Holz oder Holzkohle. Es ist aber auch bekannt, aus Biomassen Wasserstoff oder Alkohol zu gewinnen. Auch diese Energien sind CO₂-neutral. Das bei der Verbrennung von Holz freigesetzte CO₂ ist vorher durch Photosynthese der Atmosphäre entzogen worden.

Alle diese bekannten Maßnahmen sind günstigenfalls CO₂-neutral Sie können nicht den vorhandenen CO₂-Gehalt der Atmosphäre vermindern oder aus anderen Quellen anfallendes CO₂ kompensieren.

Aus der Veröffentlichung Seifritz "Should we store carbon in Charcoal", Int J. Hydrogen Energy, Vol. 18, No pp 405 - 407, 1993 ist ein Verfahren bekannt, bei dem in Entwicklungsländern Holzkohle erzeugt und gelagert wird, um des Luft CO₂ dauerhaft zu entzichen.

### Offenbarung der Erfindung

Der Erfindung liegt die Aufgabe zugrunde, ein Verfahren der eingangs genannten Art, das gleichzeitig eine Verminderung des CO₂-Anteils der Luft bewirkt.

Das erfindungsgemäße Verfahren umfaßt die Verfahrensschritte gemäß Anspruch 1.

Die Menge von photosynthetischer Biomasse, zum Beispiel Holz, hat CO₂ aus der Atmosphäre entnommen und damit den CO₂-Anteil der Atmosphäre verringert. Wenn nun diese Biomasse in Holzkohle umgesetzt wird, dann ergibt sich ein lagerfähiges Material, das zweckmäßig gelagert nicht unter Entwicklung von Treibhausgasen verrottet. Wenn nun eine wesentliche Teilmenge der Holzkohle dauerhaft gelagert wird, dann wird eine entsprechende Menge an CO₂ der Atmosphäre nachhaltig entzogen.

Die Restmenge kann in bekannter Weise in Energie oder Energieträger wie Wärme, Elektrizität oder Wasserstoff umgesetzt werden. Das Land, auf welchem die pflanzliche Biomasse vor der Umwandlung in Holzkohle erzeugt wurde, kann wieder in geeigneter

Weise bepflanzt und erneut zur Erzeugung photosynthetischer Biomasse und daraus von Holzkohle genutzt werden.

### Beschreibung von bevorzugten Ausführungsbeispielen

Beispiel 1: Aus photosynthetischer Biomasse in bekannter Weise erzeugte Holzkohle wird in einer Bunkeranlage gelagert. Dazu wird die Holzkohle mit in der Technik üblichen Fördereinrichtungen in die Bunkeranlage eingebracht und bei Bedarf wieder ausgebracht. Als solche Bunkeranlage kommen beispielsweise unterirdische Hohlräume in Betracht wie sie in einem Kohle-, Erz- oder Salzbergwerk oder dergleichen vorhanden sind, aber auch oberirdische Bunkeranlagen bekannter Konstruktion. Die Lagerung der Holzkohle ist für Zeiträume bis zu 20 Jahren oder mehr vorgesehen. Zur Verhinderung von Entzündungen oder oxidativen Abbauvorgängen wird die Holzkohle unter einem nicht entflammbaren Schutzgas gelagert, dessen spezifisches Gewicht höher ist als das der Luft wie CO₂ oder gegebenenfalls auch ein Edelgas. Die jeweilige Bunkeranlage ist mit bekannten Einrichtungen so ausgerüstet, daß die eingelagerte Holzkohle vor Wassereinbrüchen und/oder überhöhten Temperaturen geschützt ist. Es können in einer Bunkeranlage auch mehrere, voneinander getrennte Holzkohlespeicher vorgesehen sein.

Beispiel 2: Nach den Angaben des Bundesumweltamtes wurden in der Bundesrepublik Deutschland 1990 1000 Mio t CO₂ emittiert. Gemäß den Verträgen von Berlin und Kyoto hat sich die Bundesrepublik Deutschland verpflichtet, die jährliche CO₂-Emission bis 2005 um 25%, bezogen auf die CO₂-Emission von 1990, zu reduzieren, d.h. um 250 Mio t/a. Bis jetzt wurde durch eine ganze Reihe von Maßnahmen bereits eine Reduktion um 17% erreicht, die bis zum Jahre 2005 noch weiter um 8% oder 80 Mio t/a erhöht werden muß. Nach dem Molgewicht von 44 für CO₂ und dem Atomgewicht von 12 für Kohlenstoff entspricht diese Reduktion um 80 Mio t/a CO₂ einer Menge von 21,8 Mio t/a Kohlenstoff bzw. 24,4 Mio t/a Holzkohle, die zu 89,2% aus reinem Kohlenstoff besteht.

In einer Veröffentlichung des Bundesministeriums für Ernährung, Landwirtschaft und Forsten unter dem Titel "Unser Wald" ist auf den Seiten 41 und 42 angegeben, daß in der Bundesrepublik Deutschland im Jahre 1997 57 Mio m³ Holz in nachhaltiger Forstwirtschaft erzeugt wurden, von denen 38 Mio m³ geerntet und dem Verbrauch zugeführt wurden. Diese forstwirtschaftlich erzeugte Holzmenge bindet das in der Luft enthaltene CO₂; ein großer Teil dieses Holzes wird zu Holzprodukten und Gegenständen weiter verarbeitet, die nicht der Verbrennung zugeführt werden, während ein anderer Teil unter Bildung von CO₂ verbrannt wird. Die Holz- und Forstwirtschaft trägt entsprechend diesen Verhältnissen zum CO₂-Gehalt der Luft bei. Dementsprechend läßt sich der CO₂-Gehalt der Luft verringern, wenn (a) die Bindung von CO₂ durch höhere Holzerzeugung und/oder (b) die Erzeugung von CO₂ durch Holzverbrennung vermindert wird, wobei das zusätzlich erzeugte Holz und/oder das nicht verbrannte Holz in Holzkohle umgewandelt und gemäß Beispiel 1 eingelagert wird. Die Umwandlung in Holzkohle hat noch den zusätzlichen Vorteil, daß dabei wertvolle Nebenprodukte wie Essigsäure und Homologe, Methanol und Aceton anfallen, die so auf gewünschte Weise aus nachwachsendem Rohstoff und nicht aus fossiler Quelle erhalten werden.

Der Energieinhalt von Brennstoffen wird häufig in Steinkohleeinheiten SKE angegeben; diese Einheit entspricht dem mittleren Energieinhalt von 1 kg Steinkohle mit einem mittleren Kohlenstoffgehalt von 0,8923 kg. Nach Römpps Chemie-Lexikon 1983, S. 3968, ist 1 kg SKE = 8,141 kWh und entspricht 1,9 kg Holz, die damit ebenfalls 0,8923 kg Kohlenstoff enthalten. Bei einer mittleren Holzdichte von 0,66 g/cm³ (Römpps Chemie-Lexikon 1983, S. 1733, l.Sp.) entsprechend 0,66 t/m³ enthält 1 m³ Holz 0,31 t Kohlenstoff, was einer Bindung von 1,14 t atmosphärischem CO₂ entspricht. Wenn also, wie nach der vorstehend zitierten Selbstverpflichtung, 80 Mio t/a CO₂ in Form von Holz gebunden und in Form von 24,4 Mio t/a Holzkohle eingelagert werden sollen, so wäre dazu eine zusätzliche, nachhaltige forstwirtschaftliche Produktion von 37 Mio m³/a Holz erforderlich; diese Menge würde sich noch in dem Maße verringern lassen, in dem sich die Verbrennung von Holz zur Energieerzeugung einschränken läßt. Eine solche zusätzliche nachhaltige Holzerzeugung erscheint durchaus machbar, wenn man berücksichtigt, daß (1) nach der vorgenannten Veröffentlichung "Unser Wald" 1997 nur 38 Mio m³ von den erzeugten 57 Mio m³ Holz genutzt wurden, und daß (2) eine Erhöhung dieser Erzeugung um den Faktor 2-3 unter Fachleuten durchaus für möglich gehalten wird. Die zusätzliche nachhaltige Holzerzeugung von 37 Mio m³ kann bis zum 1.1. 2005 auch so durchgeführt werden, daß die Holzproduktion zum Beispiel in jedem Jahr um 9,25 Mio m³ erhöht wird, sodaß sich die eingelagerten Holzkohlemengen in jedem Jahr um 6,1 Mio t erhöhen.

Beispiel 3: Ein Minderteil der in Beispiel 1 oder 2 erzeugten oder eingelagerten Holzkohle, zum Beispiel 25%, wird mit Wasser unter Bildung von Wasserstoff umgesetzt, der nicht nur einen sehr energiereichen Brennstoff darstellt, sondern insbesondere das für die Umwelt bzw. Atmosphäre vollkommen unschädliche Verbrennungsprodukt Wasser liefert. Die Reaktion zwischen Kohlenstoff und Wasser nach der Reaktionsgleichung

C + 2H₂O = CO₂ + 2H₂

ist jedoch komplizierter:
In einem technischen Druckreaktor tritt zunächst eine stark endotherme Kohlenstoffvergasung nach

   (1) C + H₂O = CO + H₂

   erst bei sehr hohen Temperaturen ein, der bei nur noch mäßig erhöhten Temperaturen die schwach exotherme "Wassergas-Shiftreaktion"

   (2) CO + H₂O = CO₂ + H₂

   folgt.
Zur Erzielung der im Eingang der Kohlevergasung (1) im Druckreaktor erforderlichen Temperaturen über 1500°C wird mit den Reaktanden Wasser und feinst zerkleinertem Kohlenstoff eine erforderliche Menge Sauerstoffgas zugemischt. Es bleiben so noch ca. 83,4% als Prozeß-Kohlenstoff für die Wasserstoffproduktion zur Verfügung.

Eine typische "Texaco-Anlage" zur Kohlevergasung (Kirk-Othmer, ENCYCLOPEDIA OF CHEMICAL TECHNOLOGY 3.Ed. Vol. 12, Wiley, New York, p. 959/960) mit einer Kapazität von 2,83x10⁶ m³/d Rohwasserstoff wird mit 1852 t/d fein zerkleinerter Holzkohle (davon 83,4 % Prozeßholzkohle) beschickt. Gegenüber allen fossilen Kohlen besitzt Holzkohle den Vorteil, daß sie frei ist von schwefelhaltigen und schwermetallhaltigen Katalysatorgiften, was die Standzeiten der Katalysatoren verlängert und deren Wirksamkeit verbessert sowie besondere Gasreinigungsoperationen überflüssig macht.

Der Beschickung der Texaco-Anlage mit 1852 t/d bzw. 0,676 Mio t/a Holzkohle stehen im Jahr 2005 25% oder 6,1 Mio t/a Holzkohle aus der Einbunkerung gegenüber, womit 9 derartige Anlagen betrieben werden können. Die großzügige Einlagerung der Holzkohle kann die Zuverlässigkeit der Logistik der solaren Wasserstoffwirtschaft begründen.

Die eingebunkerte Holzkohle läßt sich zu beliebiger Zeit zur Wasserstoffproduktion heranziehen, da sie in der Hauptmenge zur nachhaltigen Energievorsorge durch Umkehrung der Verbrennung eingelagert bleiben muß.

Bei den Umsetzungen (1) und (2) entstehen Wasserstoff und CO₂. Die so erzeugte Menge CO₂ entspricht der Menge, die vorher der Atmosphäre entnommen und in der photosynthetischen Biomasse Holz gebunden wurde. In der Bilanz steht die so erzeugte Menge an CO₂ der Bildung der entsprechenden Menge photosynthetischer Biomasse gegenüber. Der erzeugte Wasserstoff ersetzt andere, insbesondere aus fossilen Quellen stammende Brennstoffe, bei deren Verbrennung CO₂ gebildet wird, und dient bevorzugt der Energieerzeugung durch Brennstoffzellen.

Die Reaktion kann auch so geführt werden, daß das aus der Reaktion (1) gewonnene Synthesegas nach bekannten, insbesondere katalytischen Verfahren zu industriellen Produkten umgesetzt wird, die in vielen Bereichen der Technik Verwendung finden und die auf diese Weise ebenfalls aus nachwachsenden Rohstoffen erzeugt werden, so daß dazu nicht auf fossile Rohstoffe wie Erdöl, Erdgas oder Kohle zurückgegriffen werden muß.

## Patentansprüche

1. Verfahren zur Erzeugung von Wasserstoff mit den Verfahrensschritten
(a) Erzeugung einer Menge von Biomasse durch Photosynthese unter Speicherung von Solarenergie und Verminderung des CO₂-Anteils der Luft,
(b) Umsetzung der Menge von Biomasse in ein Verkohlungsprodukt und
(c) Umsetzen des Verkohlungsprodukts in Wasserstoff.
**dadurch gekennzeichnet, daß**
(d) das Verkohlungsprodukt Holzkohle aus Holz ist, das in nachhaltiger Forstwirtschaft erzeugt wurde,
(e) nur eine Mindermenge von bis zu 25% der Holzkohle zu Wasserstoff umgesetzt wird, und
(f) der Rest der Holzkohle dauerhaft, ohne Entwicklung von Treibhausgasen eingelagert wird.

2. Verfahren nach Anspruch 1, **dadurch gekennzeichnet, daß** die Lagerung der Holzkohle unter Schutzgas erfolgt.

3. Verfahren nach Anspruch 2, **dadurch gekennzeichnet, daß** als Schutzgas CO₂ verwendet wird.

4. Verfahren nach einem der Ansprüche 1-3, **dadurch gekennzeichnet, daß** die Holzkohle in Hohlräumen von Bergwerken gelagert wird.

## Claims

1. Method of producing hydrogen, including the method steps of
(a) producing an amount of biomass by means of photosynthesis and thereby storing solar energy and reducing the CO₂ portion in the air,
(b) converting the amount of biomass into a carbonaceous product,
(c) converting said carbonaceous product into hydrogen,
**characterized in that**
(d) said carbonaceous product constitutes charcoal from wood which has been produced by sustainable forestry,
(e) only a minor amount of up to 25% of said charcoal is converted into hydrogen and
(f) the remainder of said charcoal is stored without formation of greenhouse gases.

2. Method according to claim 1, **characterized in that** said charcoal is stored under inert gas.

3. Method according to claim 2, **characterized in that** CO₂ is used as said inert gas.

4. Method according to anyone of claims 1 to 3, **characterized in that** said charcoal is stored in cavities of mines.

## Revendications

1. Procédé destiné à produire de l'hydrogène présentant les étapes de procédé de
(a) production d'une quantité de biomasse par photosynthèse en emmagasinant l'énergie solaire et en réduisant la part de CO₂ dans l'air,
(b) transformation de la quantité de biomasse en produit de carbonisation et
(c) transformation du produit de carbonisation en hydrogène,
**caractérisé en ce que**
(d) le produit de carbonisation est du charbon de bois composé de bois qui provient d'une économie forestière durable,
(e) seule une faible quantité allant jusqu'à 25% de charbon de bois est transformée en hydrogène, et
(f) le reste de charbon de bois est stocké de façon durable sans former de gaz à effet de serre.

2. Procédé selon la revendication 1, **caractérisé en ce que** le stockage du charbon de bois s'effectue dans un gaz protecteur.

3. Procédé selon la revendication 2, **caractérisé en ce que** du CO₂ est utilisé en tant que gaz protecteur.

4. Procédé selon l'une quelconque des revendications 1-3, **caractérisé en ce que** le charbon de bois est stocké dans des cavités d'exploitations minières.
